# EUROPEAN PATENT SPECIFICATION

(11) **EP 4 242 695 B1**
(45) Date of publication and mention of the grant of the patent: **15.07.2026**
(21) Application number: 21909998.3
(22) Date of filing: 08.11.2021
(51) Int. Cl.: G01T 1/20, G01T 1/202

(54) **RADIATION DETECTOR, RADIATION DETECTOR MANUFACTURING METHOD, AND SCINTILLATOR PANEL UNIT**
STRAHLUNGSDETEKTOR, STRAHLUNGSDETEKTORHERSTELLUNGSVERFAHREN UND SZINTILLATORTAFELEINHEIT
DÉTECTEUR DE RADIATION, PROCÉDÉ DE FABRICATION DE DÉTECTEUR DE RADIATION ET UNITÉ DE PANNEAU DE SCINTILLATEUR

(30) Priority: 23.12.2020 JP 2020213317
(43) Date of publication of application: 13.09.2023
(73) Proprietor: Hamamatsu Photonics K.K., Hamamatsu-shi, Shizuoka 435-8558 (JP)
(72) Inventor: GOTO Keisuke, Hamamatsu-shi, Shizuoka 435-8558 (JP); YAMAJI Haruki, Hamamatsu-shi, Shizuoka 435-8558 (JP); SAKURAI Jun, Hamamatsu-shi, Shizuoka 435-8558 (JP); SHIRAKAWA Kazuhiro, Hamamatsu-shi, Shizuoka 435-8558 (JP); HATANAKA Masashi, Hamamatsu-shi, Shizuoka 435-8558 (JP)
(74) Representative: Grünecker Patent- und Rechtsanwälte PartG mbB
(86) International application number: PCT/JP2021/040995
(87) International publication number: WO 2022/137844

(56) References cited:
- WO-A1-2008/078702
- WO-A1-2018/020555
- WO-A1-2018/173894
- JP-A- 2002 048 870
- JP-A- 2002 164 525
- JP-A- 2011 128 031
- JP-A- 2017 110 929
- JP-A- 2020 091 236
- US-A1- 2012 153 163
- US-A1- 2013 341 516

## Description

### Technical Field

The present disclosure relates to a radiation detector and a method for manufacturing such a radiation detector.

### Background Art

There has been known a radiation detector including a sensor panel having a light receiving surface and a scintillator panel disposed on the light receiving surface, in which a scintillator layer in the scintillator panel is formed of a plurality of columnar crystals, and an angle formed by a surface on the sensor panel side in the scintillator panel and a sensor panel side surface exceeds 90 degrees (see, for example, Patent Literature 1). JP 2002 048870 A relates to a radiation detector and a scintillator panel.

### Citation List

### Patent Literature

Patent Literature 1: Japanese Unexamined Patent Publication No. 2019-060757. JP 2002048870 A discloses a radiation detector comprising a sensor panel, a first scintillator panel and a second scintillator panel which can be used for large-area imaging.

### Summary of Invention

### Technical Problem

In the radiation detector as described above, an increase in area of a radiation detection region is required as the area of the sensor panel is increased. However, when the scintillator layer is formed of a plurality of columnar crystals in the scintillator panel, a high-resolution radiological image is easily obtained, but the area of the scintillator panel is difficult to be increased in order to increase the area of the radiation detection region without taking into consideration the shape of the scintillator panel at all.

An object of the present disclosure is to provide a radiation detector capable of achieving both an increase in area of a radiation detection region and an increase in resolution of a radiological image, a method for manufacturing such a radiation detector, and a scintillator panel unit suitable for these.

### Solution to Problem

A radiation detector of one aspect of the present invention is defined in claim 1.

In the radiation detector according to the claimed invention, the first scintillator panel and the second scintillator panel are disposed on the light receiving surface of the sensor panel in a state of being adjacent to each other along the light receiving surface of the sensor panel. In the first scintillator panel and the second scintillator panel, the first scintillator layer reaches the first portion extending along the second scintillator panel of the outer edge of the first substrate, and the second scintillator layer reaches the second portion extending along the first scintillator panel of the outer edge of the second substrate. Therefore, while each of the first scintillator panel and the second scintillator panel is configured in such a size that the plurality of columnar crystals can be reliably formed, one radiation detection region can be obtained by the first scintillator panel and the second scintillator panel. Moreover, the first angle formed by the surface on the sensor panel side in the first scintillator panel and the side surface on the second scintillator panel side in the first scintillator panel is 45 degrees or more and less than 90 degrees, and the second angle formed by the surface on the sensor panel side in the second scintillator panel and the side surface on the first scintillator panel side in the second scintillator panel is 45 degrees or more and 90 degrees or less.
According to this, a joint portion between the first scintillator panel and the second scintillator panel can be prevented from being released from the light receiving surface of the sensor panel due to thermal expansion of air at the joint portion. Further, since the first scintillator layer and the second scintillator layer come close to each other, deterioration of the image quality of a radiological image at the joint portion between the first scintillator panel and the second scintillator panel can be suppressed. Due to the above, according to the radiation detector of one aspect of the present disclosure, both of an increase in area of the radiation detection region and an increase in resolution of the radiological image can be achieved.

In the radiation detector of one aspect of the present disclosure, the first substrate and the second substrate each may have flexibility. According to this, improvement in workability when each of the first scintillator panel and the second scintillator panel is attached to the light receiving surface of the sensor panel can be achieved.

In the radiation detector of one aspect of the present disclosure, each of the first angle and the second angle may be less than 90 degrees, and the sensor panel may have flexibility. According to this, the entire radiation detector can be deflected according to the installation environment of the radiation detector, and the like. Further, when the entire radiation detector is deflected such that the sensor panel is located outside with respect to the first scintillator panel and the second scintillator panel, the first scintillator panel and the second scintillator panel can be prevented from physically interfering with each other.

The radiation detector of one aspect of the present disclosure may further include an adhesive layer disposed between the light receiving surface and the first scintillator panel and between the light receiving surface and the second scintillator panel, and each of the first scintillator panel and the second scintillator panel may be attached to the light receiving surface by the adhesive layer. According to this, each of the first scintillator panel and the second scintillator panel can be reliably disposed on the light receiving surface of the sensor panel.

In the radiation detector of one aspect of the present disclosure, the adhesive layer may contain a pressure-sensitive adhesive or an adhesive. According to this, each of the first scintillator panel and the second scintillator panel can be reliably attached to the light receiving surface of the sensor panel.

In the radiation detector of one aspect of the present disclosure, the first scintillator panel may further have a first protective layer covering the first substrate and the first scintillator layer, and the second scintillator panel may further have a second protective layer covering the second substrate and the second scintillator layer. According to this, the plurality of columnar crystals having deliquescent properties can be more reliably protected.

The radiation detector of one aspect of the present disclosure may further include a granular phosphor disposed between the first scintillator panel and the second scintillator panel. According to this, deterioration of the image quality of a radiological image at the joint portion between the first scintillator panel and the second scintillator panel can be suppressed.

The radiation detector of one aspect of the present disclosure may further include a moisture-proof layer disposed on the first scintillator panel and the second scintillator panel on a side opposite to the sensor panel, and the moisture-proof layer may be provided continuous over the first scintillator panel and the second scintillator panel. According to this, moisture can be prevented from coming into the joint portion between the first scintillator panel and the second scintillator panel, and the plurality of columnar crystals having deliquescent properties can be reliably protected. Further, even when a difference in expansion and contraction due to a temperature change occurs between the sensor panel and the first scintillator panel and between the sensor panel and the second scintillator panel, the joint portion between the first scintillator panel and the second scintillator panel can be prevented from being released from the light receiving surface of the sensor panel.

In the radiation detector of one aspect of the present disclosure, the moisture-proof layer may have a main body layer having flexibility and an inorganic layer disposed on the main body layer, and the moisture-proof layer may be disposed on the first scintillator panel and the second scintillator panel in a state where the inorganic layer is positioned on a side of the first scintillator panel and the second scintillator panel with respect to the main body layer. According to this, the inorganic layer can function as the moisture-proof layer, and the main body layer can function as the protective layer.

The radiation detector of one aspect of the present disclosure may further include a sealing member, an outer edge of the moisture-proof layer may reach a surface of the sensor panel around the light receiving surface, and the sealing member may seal the outer edge of the moisture-proof layer in the surface of the sensor panel in a state where a region defined by the sensor panel and the moisture-proof layer is decompressed. According to this, the moisture-proof layer can be brought into close contact with the first scintillator panel and the second scintillator panel without using the adhesive layer.

The radiation detector of one aspect of the present disclosure may further include a first moisture-proof layer disposed on the first scintillator panel on a side opposite to the sensor panel, a second moisture-proof layer disposed on the second scintillator panel on a side opposite to the sensor panel, a first protective layer covering the first scintillator panel and the first moisture-proof layer, and a second protective layer covering the second scintillator panel and the second moisture-proof layer. According to this, the plurality of columnar crystals having deliquescent properties can be protected.

A method for manufacturing a radiation detector of one aspect of the present invention is defined in claim 12.

According to the method for manufacturing the radiation detector of one aspect of the present disclosure, the aforementioned radiation detector can be easily and reliably obtained.

A scintillator panel unit of one aspect of the present disclosure includes a support layer, and a first scintillator panel and a second scintillator panel disposed on the support layer in a state of being adjacent to each other along the support layer, in which the first scintillator panel has a first substrate and a first scintillator layer including a plurality of columnar crystals formed on the first substrate, the second scintillator panel has a second substrate and a second scintillator layer including a plurality of columnar crystals formed on the second substrate, an outer edge of the first substrate when viewed from the first scintillator layer side includes a first portion along the second scintillator panel, and the first scintillator layer reaches at least the first portion, an outer edge of the second substrate when viewed from the second scintillator layer side includes a second portion extending along the first scintillator panel, and the second scintillator layer reaches at least the second portion, a first angle formed by a surface on the sensor panel side in the first scintillator panel and a side surface on the second scintillator panel side in the first scintillator panel is 90 degrees or less, and a second angle formed by a surface on the sensor panel side in the second scintillator panel and a side surface on the first scintillator panel side in the second scintillator panel is 90 degrees or less.

According to the scintillator panel unit of one aspect of the present disclosure, the first scintillator panel, the second scintillator panel, and the support layer can be handled in a state of being integrated with one another.

In the scintillator panel unit of one aspect of the present disclosure, the support layer may be an adhesive layer, the first scintillator panel may be disposed on the adhesive layer in a state where the first scintillator layer is positioned on the adhesive layer side with respect to the first substrate, the second scintillator layer may be disposed on the adhesive layer in a state where the second scintillator layer is positioned on the adhesive layer side with respect to the second substrate, and the adhesive layer may be provided continuous over the first scintillator panel and the second scintillator panel. According to this, the first scintillator panel, the second scintillator panel, and the adhesive layer can be handled in a state of being integrated with one another.

In the scintillator panel unit of one aspect of the present disclosure, the support layer may be a moisture-proof layer, the first scintillator panel may be disposed on the moisture-proof layer in a state where the first substrate is positioned on the moisture-proof layer side with respect to the first scintillator layer, the second scintillator layer may be disposed on the moisture-proof layer in a state where the second substrate is positioned on the moisture-proof layer side with respect to the second scintillator layer, and the moisture-proof layer may be provided continuous over the first scintillator panel and the second scintillator panel. According to this, the first scintillator panel, the second scintillator panel, and the moisture-proof layer can be handled in a state of being integrated with one another.

In the scintillator panel unit of one aspect of the present disclosure, the first scintillator panel may further have a first protective layer covering the first substrate and the first scintillator layer, and the second scintillator panel may further have a second protective layer covering the second substrate and the second scintillator layer. According to this, the plurality of columnar crystals having deliquescent properties can be protected.

The scintillator panel unit of one aspect of the present disclosure may further include a first moisture-proof layer disposed on the first scintillator panel on a side opposite to the adhesive layer, a second moisture-proof layer disposed on the second scintillator panel on a side opposite to the adhesive layer, a first protective layer covering the first scintillator panel and the first moisture-proof layer, and a second protective layer covering the second scintillator panel and the second moisture-proof layer. According to this, the plurality of columnar crystals having deliquescent properties can be protected.

### Advantageous Effects of Invention

According to the present disclosure, it is possible to provide a radiation detector capable of achieving both an increase in area of a radiation detection region and an increase in resolution of a radiological image, a method for manufacturing such a radiation detector, and a scintillator panel unit suitable for these.

### Brief Description of Drawings

FIG. 1 is a cross-sectional view of a radiation detector of an embodiment.
FIG. 2 is a cross-sectional view of a scintillator panel unit of an embodiment.
FIG. 3 is a cross-sectional view of a radiation detector in one step of a method for manufacturing a radiation detector of an embodiment.
FIG. 4 is a cross-sectional view of a radiation detector of a modification example.
FIG. 5 is a cross-sectional view of a part of the radiation detector of the modification example.
FIG. 6 is a cross-sectional view of a scintillator panel unit of a modification example.
FIG. 7 is a cross-sectional view of a radiation detector of a modification example.
FIG. 8 is a cross-sectional view of a radiation detector of a modification example.
FIG. 9 is a cross-sectional view of a scintillator panel unit of a modification example.
FIG. 10 is a cross-sectional view of a scintillator panel unit of a modification example.

### Description of Embodiments

Hereinafter, embodiments of the present disclosure will be described in detail with reference to the drawings. Note that, in the drawings, the same or corresponding portions will be denoted by the same reference numerals, and redundant description thereof will not be provided.

### [Configuration of Radiation Detector]

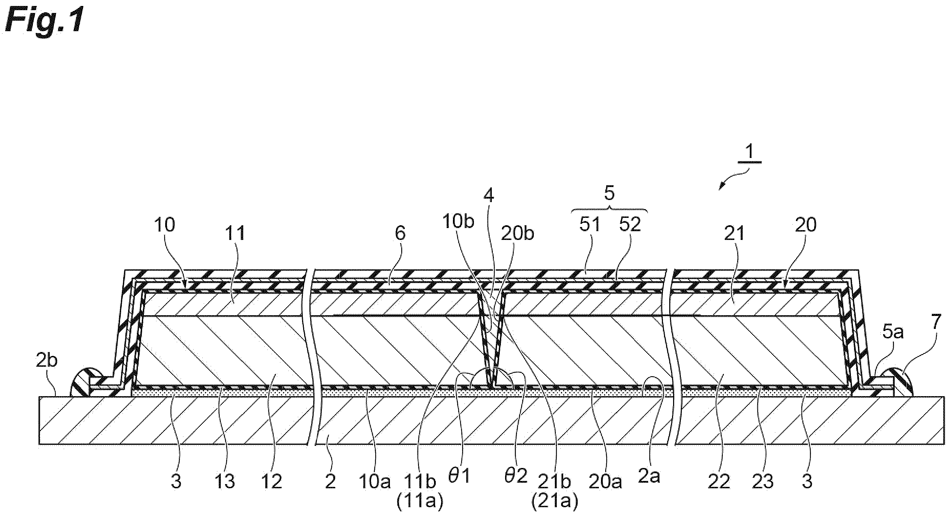

As illustrated in FIG. 1, a radiation detector 1 includes a sensor panel 2, a first scintillator panel 10, a second scintillator panel 20, an adhesive layer 3, a granular phosphor 4, a moisture-proof layer 5, an adhesive layer 6, and a sealing member 7. In the radiation detector 1, when a radial ray (for example, X ray) enters the first scintillator panel 10 and the second scintillator panel 20, scintillation light is generated in the first scintillator panel 10 and the second scintillator panel 20, and the scintillation light is detected by the sensor panel. The radiation detector 1 is used as a radiation imaging apparatus, for example, in a radiological image diagnostic apparatus for medical use or a nondestructive inspection apparatus.

The sensor panel 2 includes a plurality of photoelectric conversion elements (not illustrated) disposed along a light receiving surface 2a. Each photoelectric conversion element constitutes a pixel and outputs an electrical signal according to the incident scintillation light. The light receiving surface 2a is provided on one main surface of the sensor panel 2. A surface 2b, which is a frame-shaped region encircling the light receiving surface 2a, is provided on the main surface. The sensor panel 2 has flexibility. The material for a substrate on which the plurality of photoelectric conversion elements are provided in the sensor panel 2 is, for example, PI (polyimide), PET (polyethylene terephthalate), PEN (polyethylene naphthalate), PP (polypropylene), PE (polyester), or PMMA (polymethyl methacrylate).

The first scintillator panel 10 and the second scintillator panel 20 are disposed on the light receiving surface 2a in a state of being adjacent to each other along the light receiving surface 2a. The first scintillator panel 10 has a first substrate 11, a first scintillator layer 12, and a first protective layer 13. The second scintillator panel 20 has a second substrate 21, a second scintillator layer 22, and a second protective layer 23.

The first substrate 11 and the second substrate 21 each have flexibility. The material for each of the first substrate 11 and the second substrate 21 is, for example, PET, PEN, PI, PP, PE, or PMMA. The thickness of each of the first substrate 11 and the second substrate 21 is, for example, 50 µm or more and 250 µm or less. Note that, a functional film may be formed on the front surface and the back surface of each of the first substrate 11 and the second substrate 21. This functional film is, for example, readily adhesive coating, antistatic coating, or a moisture-proof film (polyparaxylylene film). This functional film may be a laminate film including a plurality of films each having a different function.

The first scintillator layer 12 includes a plurality of columnar crystals formed on the first substrate 11. The second scintillator layer 22 includes a plurality of columnar crystals formed on the second substrate 21. The plurality of columnar crystals are formed on the first substrate 11 or the second substrate 21, for example, by evaporating a scintillator material on the first substrate 11 or the second substrate 21. The material for each of the first scintillator layer 12 and the second scintillator layer 22 is, for example, CsI:Tl (cesium iodide containing thallium as an activator), CsI:Na (cesium iodide containing sodium as an activator), CsI:Ce (cesium iodide containing cerium as an activator), or CsI:Tl,Eu (cesium iodide containing thallium and europium as activators). The thickness of each of the first scintillator layer 12 and the second scintillator layer 22 is, for example, 100 µm or more and 1000 µm or less (preferably, 400 µm or more and 800 µm or less).

The first protective layer 13 covers the first substrate 11 and the first scintillator layer 12. The second protective layer 23 covers the second substrate 21 and the second scintillator layer 22. The material for each of the first protective layer 13 and the second protective layer 23 is, for example, parylene (polyparaxylene). The thickness of each of the first protective layer 13 and the second protective layer 23 is, for example, 0.5 µm or more and 20 µm or less.

The first scintillator panel 10 is disposed on the light receiving surface 2a in a state where the first scintillator layer 12 is positioned on the light receiving surface 2a side with respect to the first substrate 11. The first scintillator panel 10 has a rectangular shape having a one-side length of 300 mm or more when viewed from a thickness direction of the first substrate 11. The second scintillator panel 20 is disposed on the light receiving surface 2a in a state where the second scintillator layer 22 is positioned on the light receiving surface 2a side with respect to the second substrate 21. The second scintillator panel 20 has a rectangular shape having a one-side length of 300 mm or more when viewed from a thickness direction of the second substrate 21.

An outer edge 11a of the first substrate 11 when viewed from the first scintillator layer 12 side includes a first portion 11b extending along the second scintillator panel 20. The first scintillator layer 12 reaches the first portion 11b. In the present embodiment, the first scintillator layer 12 reaches the entire portion of the outer edge 11a. An outer edge 21a of the second substrate 21 when viewed from the second scintillator layer 22 side includes a second portion 21b extending along the first scintillator panel 10. The second scintillator layer 22 reaches the second portion 21b. In the present embodiment, the second scintillator layer 22 reaches the entire portion of the outer edge 21a. The first portion 11b of the outer edge 11a of the first substrate 11 and the second portion 21b of the outer edge 21a of the second substrate 21 face each other.

Note that, the first substrate 11 and the first scintillator layer 12 are obtained by forming a scintillator layer including portions corresponding to a plurality of the first scintillator layers 12 on a substrate including portions corresponding to a plurality of the first substrates 11 and then cutting the substrate and the scintillator layer. The second substrate 21 and the second scintillator layer 22 are obtained by forming a scintillator layer including portions corresponding to a plurality of the second scintillator layers 22 on a substrate including portions corresponding to a plurality of the second substrates 21 and then cutting the substrate and the scintillator layer. The first substrate 11 and the first scintillator layer 12 may be obtained by forming a scintillator layer including a portion corresponding to one first scintillator layer 12 on a substrate including a portion corresponding to one first substrate 11 and then clipping the substrate and the scintillator layer. The second substrate 21 and the second scintillator layer 22 may be obtained by forming a scintillator layer including a portion corresponding to one second scintillator layer 22 on a substrate including a portion corresponding to one second substrate 21 and then clipping the substrate and the scintillator layer.

A first angle θ1 formed by a surface 10a on the sensor panel 2 side (the first scintillator layer 12 side with respect to the first substrate 11) in the first scintillator panel 10 and a side surface 10b on the second scintillator panel 20 side in the first scintillator panel 10 is 45 degrees or more and less than 90 degrees. In the present embodiment, the surface 10a and the entire side surface of the first scintillator panel 10 form an angle of 45 degrees or more and less than 90 degrees. A second angle θ2 formed by a surface 20a on the sensor panel 2 side (the second scintillator layer 22 side with respect to the second substrate 21) in the second scintillator panel 20 and a side surface 20b on the first scintillator panel 10 side in the second scintillator panel 20 is 45 degrees or more and less than 90 degrees. In the present embodiment, the surface 20a and the entire side surface of the second scintillator panel 20 form an angle of 45 degrees or more and less than 90 degrees. A corner portion of the first scintillator panel 10 formed by the surface 10a and the side surface 10b is in contact with a corner portion of the second scintillator panel 20 formed by the surface 20a and the side surface 20b.

The adhesive layer 3 is disposed between the light receiving surface 2a and the first scintillator panel 10 and between the light receiving surface 2a and the second scintillator panel 20. The first scintillator panel 10 is attached to the light receiving surface 2a by the adhesive layer 3 in a state where the first scintillator layer 12 is positioned on the light receiving surface 2a side with respect to the first substrate 11. The second scintillator panel 20 is attached to the light receiving surface 2a by the adhesive layer 3 in a state where the second scintillator layer 22 is positioned on the light receiving surface 2a side with respect to the second substrate 21. The adhesive layer 3 is provided continuous over the first scintillator panel 10 and the second scintillator panel 20. That is, the adhesive layer 3 is not separated for each of the first scintillator panel 10 and the second scintillator panel 20 but is integrally formed.

The adhesive layer 3 is a pressure-sensitive adhesive or an adhesive. The pressure-sensitive adhesive means one not cured after adhesion. The adhesive means one cured after adhesion. The material for the adhesive layer 3 is, for example, a light transmissive organic material (for example, OCA (Optical Clear Adhesive)). The thickness of the adhesive layer 3 is, for example, 0.1 µm or more and 100 µm or less (preferably, 25 µm or less).

The granular phosphor 4 is disposed between the first scintillator panel 10 and the second scintillator panel 20. More specifically, the granular phosphor 4 is disposed in a groove with a V-shaped cross section formed by the side surface 10b of the first scintillator panel 10 and the side surface 20b of the second scintillator panel 20. The material for the granular phosphor 4 is, for example, GOS (gadolinium oxysulfide).

The moisture-proof layer 5 covers the first scintillator panel 10 and the second scintillator panel 20 on the sensor panel 2. The moisture-proof layer 5 is disposed on the first scintillator panel 10 and the second scintillator panel 20 on a side opposite to the sensor panel 2 and is provided continuous over the first scintillator panel 10 and the second scintillator panel 20. An outer edge 5a of the moisture-proof layer 5 reaches the surface 2b of the sensor panel 2 (the surface around the light receiving surface 2a).

The moisture-proof layer 5 has a main body layer 51 and an inorganic layer 52. The main body layer 51 has flexibility. The inorganic layer 52 is disposed on the main body layer 51. The inorganic layer 52 is attached to, for example, the main body layer 51 so as to be integrated with the main body layer 51. The moisture-proof layer 5 is disposed on the first scintillator panel 10 and the second scintillator panel 20 in a state where the inorganic layer 52 is positioned on a side of the first scintillator panel 10 and the second scintillator panel 20 with respect to the main body layer 51.

The material for the main body layer 51 is, for example, PET, PEN, PI, PP, PE, or PMMA. The thickness of the main body layer 51 is, for example, 50 µm or more and 250 µm or less. The material for the inorganic layer 52 is, for example, Al (aluminum), Cu (copper), Ti (titanium), Fe (iron), or SUS (stainless steel). The thickness of the inorganic layer 52 is, for example, 10 µm or more and 100 µm or less.

The adhesive layer 6 is disposed between the first scintillator panel 10 and the moisture-proof layer 5, between the second scintillator panel 20 and the moisture-proof layer 5, and between the surface 2b of the sensor panel 2 and the moisture-proof layer 5. The moisture-proof layer 5 is attached to the first scintillator panel 10, the second scintillator panel 20, and the surface 2b of the sensor panel 2. The adhesive layer 6 is a pressure-sensitive adhesive or an adhesive. The thickness of the adhesive layer 6 is, for example, 0.1 µm or more and 100 µm or less (preferably, 25 µm or less).

The sealing member 7 seals the outer edge 5a of the moisture-proof layer 5 in the surface 2b of the sensor panel 2. The sealing member 7 extends along the outer edge 5a in a frame shape. The material for the sealing member 7 is, for example, epoxy, silicone, fluorine, urethane, or acryl. The material for the sealing member 7 may include a filler material formed of an inorganic material such as glass. The material for the filler material may have moisture-proof properties higher than the moisture-proof properties of the main material for the sealing member 7, and is, for example, SiO₂ (silicon dioxide), Al₂O₃ (aluminum oxide), or TiO₂ (titanium oxide).

As described above, in the radiation detector 1, the first scintillator panel 10 and the second scintillator panel 20 are disposed on the light receiving surface 2a of the sensor panel 2 in a state of being adjacent to each other along the light receiving surface 2a of the sensor panel 2. In the first scintillator panel 10 and the second scintillator panel 20, the first scintillator layer 12 reaches the first portion 11b extending along the second scintillator panel 20 of the outer edge 11a of the first substrate 11, and the second scintillator layer 22 reaches the second portion 21b extending along the first scintillator panel 10 of the outer edge 21a of the second substrate 21. Therefore, while each of the first scintillator panel 10 and the second scintillator panel 20 is configured in such a size that the plurality of columnar crystals can be reliably formed, one radiation detection region can be obtained by the first scintillator panel 10 and the second scintillator panel 20. Moreover, the first angle θ1 formed by the surface 10a on the sensor panel 2 side in the first scintillator panel 10 and the side surface 10b on the second scintillator panel 20 side in the first scintillator panel 10 is 90 degrees or less, and the second angle θ2 formed by the surface 20a on the sensor panel 2 side in the second scintillator panel 20 and the side surface 20b on the first scintillator panel 10 side in the second scintillator panel 20 is 90 degrees or less. Thereby, the joint portion between the first scintillator panel 10 and the second scintillator panel 20 can be prevented from being released from the light receiving surface 2a due to thermal expansion of air at the joint portion. Further, since the first scintillator layer 12 and the second scintillator layer 22 come close to each other, deterioration of the image quality of a radiological image at the joint portion between the first scintillator panel 10 and the second scintillator panel 20 can be suppressed. Due to the above, according to the radiation detector 1, both of an increase in area of the radiation detection region and an increase in resolution of the radiological image can be achieved.

In the radiation detector 1, each of the first angle θ1 and the second angle θ2 is 45 degrees or more and less than 90 degrees. Thereby, the joint portion between the first scintillator panel 10 and the second scintillator panel 20 can be more reliably prevented from being released from the light receiving surface 2a due to thermal expansion of air at the joint portion.

In the radiation detector 1, the first substrate 11 and the second substrate 21 each have flexibility. Thereby, improvement in workability when each of the first scintillator panel 10 and the second scintillator panel 20 is attached to the light receiving surface 2a can be achieved.

In the radiation detector 1, each of the first angle θ1 and the second angle θ2 is less than 90 degrees, and the sensor panel 2 has flexibility. Thereby, the entire radiation detector 1 can be deflected according to the installation environment of the radiation detector 1, and the like. Further, when the entire radiation detector 1 is deflected such that the sensor panel 2 is located outside with respect to the first scintillator panel 10 and the second scintillator panel 20, the first scintillator panel 10 and the second scintillator panel 20 can be prevented from physically interfering with each other.

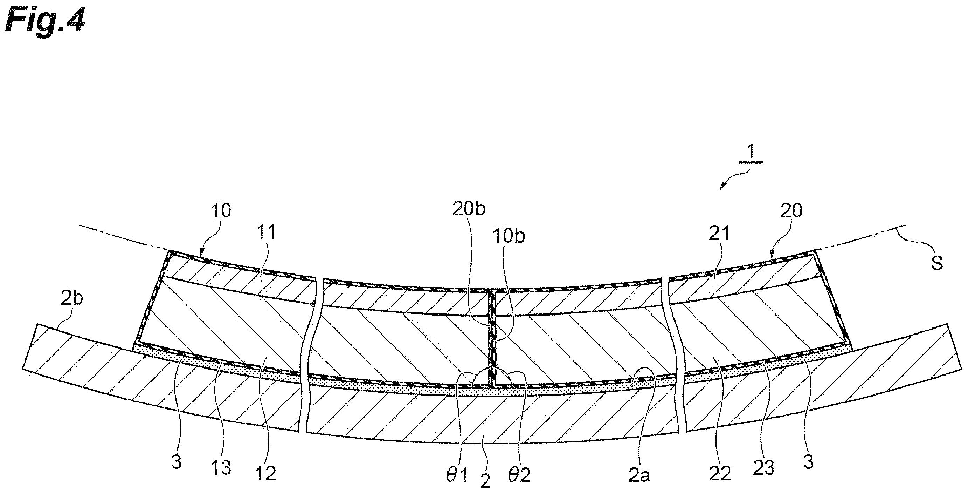

As an example, as illustrated in FIG. 4, the entire radiation detector 1 can be deflected such that the first scintillator panel 10 and the second scintillator panel 20 are disposed along a cylindrical surface S. At this time, since each of the first angle θ1 and the second angle θ2 is less than 90 degrees, the first scintillator panel 10 and the second scintillator panel 20 can be prevented from physically interfering with each other. Note that, the radiation detector 1 illustrated in FIG. 4 does not include the granular phosphor 4, the moisture-proof layer 5, the adhesive layer 6, and the sealing member 7, but may include these members as necessary.

In the radiation detector 1, the adhesive layer 3 is disposed between the light receiving surface 2a and the first scintillator panel 10 and between the light receiving surface 2a and the second scintillator panel 20, and each of the first scintillator panel 10 and the second scintillator panel 20 is attached to the light receiving surface 2a by the adhesive layer 3. Thereby, each of the first scintillator panel 10 and the second scintillator panel 20 can be reliably disposed on the light receiving surface 2a.

In the radiation detector 1, the adhesive layer 3 contains a pressure-sensitive adhesive or an adhesive. Thereby, each of the first scintillator panel 10 and the second scintillator panel 20 can be reliably attached to the light receiving surface 2a.

In the radiation detector 1, the first scintillator panel 10 has the first protective layer 13 covering the first substrate 11 and the first scintillator layer 12, and the second scintillator panel 20 has the second protective layer 23 covering the second substrate 21 and the second scintillator layer 22. Thereby, the plurality of columnar crystals having deliquescent properties can be more reliably protected.

In the radiation detector 1, the granular phosphor 4 is disposed between the first scintillator panel 10 and the second scintillator panel 20. Thereby, deterioration of the image quality of a radiological image at the joint portion between the first scintillator panel 10 and the second scintillator panel 20 can be suppressed.

In the radiation detector 1, the moisture-proof layer 5 is disposed on the first scintillator panel 10 and the second scintillator panel 20 on a side opposite to the sensor panel 2, and the moisture-proof layer 5 is provided continuous over the first scintillator panel 10 and the second scintillator panel 20. Thereby, moisture can be prevented from coming into the joint portion between the first scintillator panel 10 and the second scintillator panel 20, and the plurality of columnar crystals having deliquescent properties can be reliably protected. Further, even when a difference in expansion and contraction due to a temperature change occurs between the sensor panel 2 and the first scintillator panel 10 and between the sensor panel 2 and the second scintillator panel 20, the joint portion between the first scintillator panel 10 and the second scintillator panel 20 can be prevented from being released from the light receiving surface 2a.

In the radiation detector 1, the moisture-proof layer 5 has the main body layer 51 having flexibility and the inorganic layer 52 disposed on the main body layer 51, and the moisture-proof layer 5 is disposed on the first scintillator panel 10 and the second scintillator panel 20 in a state where the inorganic layer 52 is positioned on a side of the first scintillator panel 10 and the second scintillator panel 20 with respect to the main body layer 51. Thereby, the inorganic layer 52 can function as the moisture-proof layer 5, and the main body layer 51 can function as the protective layer.

In the radiation detector 1, the adhesive layer 3 disposed between the light receiving surface 2a and the first scintillator panel 10 and between the light receiving surface 2a and the second scintillator panel 20 is provided continuous over the first scintillator panel 10 and the second scintillator panel 20. Thereby, each of the first scintillator panel 10 and the second scintillator panel 20 can be prevented from being released from the light receiving surface 2a.

In the radiation detector 1, the first scintillator panel 10 has a rectangular shape having a one-side length of 300 mm or more when viewed from the thickness direction of the first substrate 11, and the second scintillator panel 20 has a rectangular shape having a one-side length of 300 mm or more when viewed from the thickness direction of the second substrate 21. Thereby, an increase in area of the radiation detection region can be easily and reliably achieved.

### [Configuration of Scintillator Panel Unit]

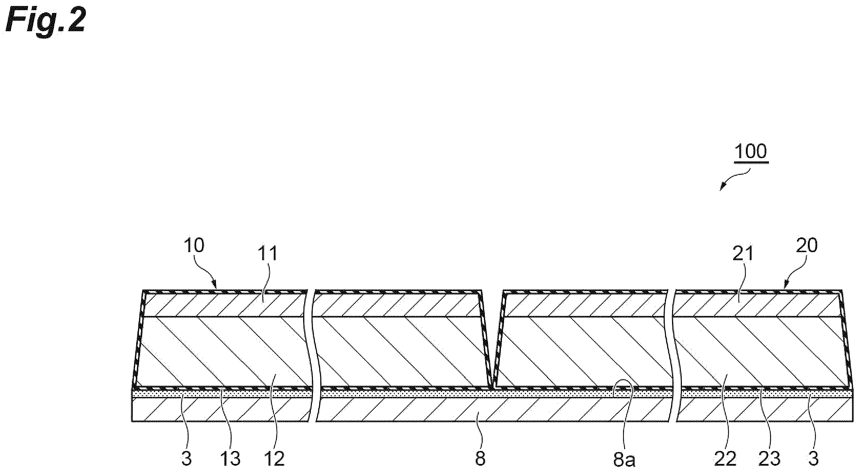

As illustrated in FIG. 2, a scintillator panel unit 100 includes a first scintillator panel 10, a second scintillator panel 20, an adhesive layer 3, and a release sheet 8. The scintillator panel unit 100 is used, for example, when the radiation detector 1 is manufactured.

The first scintillator panel 10 and the second scintillator panel 20 are disposed on the adhesive layer 3 as a support layer in a state of being adjacent to each other along the adhesive layer 3. The adhesive layer 3 is provided continuous over the first scintillator panel 10 and the second scintillator panel 20. The release sheet 8 covers the adhesive layer 3 from a side opposite to the first scintillator panel 10 and the second scintillator panel 20. The adhesive force of the adhesive layer 3 with respect to a surface 8a of the release sheet 8 is lower than the adhesive force of the adhesive layer 3 with respect to the first scintillator panel 10 and the second scintillator panel 20. Note that, in the scintillator panel unit 100, the adhesive layer 3 is a pressure-sensitive adhesive layer.

The first scintillator panel 10 is disposed on the adhesive layer 3 in a state where the first scintillator layer 12 is positioned on the adhesive layer 3 side with respect to the first substrate 11. The second scintillator panel 20 is disposed on the adhesive layer 3 in a state where the second scintillator layer 22 is positioned on the adhesive layer 3 side with respect to the second substrate 21. That is, the method of disposing the first scintillator panel 10 and the second scintillator panel 20 on the adhesive layer 3 of the scintillator panel unit 100 is the same as the method of disposing the first scintillator panel 10 and the second scintillator panel 20 on the adhesive layer 3 of the radiation detector 1 described above.

According to the scintillator panel unit 100 described above, the first scintillator panel 10, the second scintillator panel 20, and the adhesive layer 3 can be handled in a state of being integrated with one another.

In the scintillator panel unit 100, the first scintillator panel 10 has a first protective layer 13 covering the first substrate 11 and the first scintillator layer 12, and the second scintillator panel 20 has a second protective layer 23 covering the second substrate 21 and the second scintillator layer 22. Thereby, the plurality of columnar crystals having deliquescent properties can be protected.

### [Method for Manufacturing Radiation Detector]

A method for manufacturing the radiation detector 1 will be described. In the present embodiment, the aforementioned scintillator panel unit 100 is used.

First, the sensor panel 2 is prepared (a step of preparing the sensor panel 2). Subsequently, in a state of the scintillator panel unit 100 illustrated in FIG. 2, the first scintillator panel 10 and the second scintillator panel 20 are prepared (a step of preparing the first scintillator panel 10 and the second scintillator panel 20). In the step of preparing the first scintillator panel 10 and the second scintillator panel 20, each of the first angle θ1 and the second angle θ2 is 45 degrees or more and less than 90 degrees (see FIG. 1). Note that, any one of the step of preparing the sensor panel 2 and the step of preparing the first scintillator panel 10 and the second scintillator panel 20 may be previously performed, and both of the steps may be simultaneously performed.

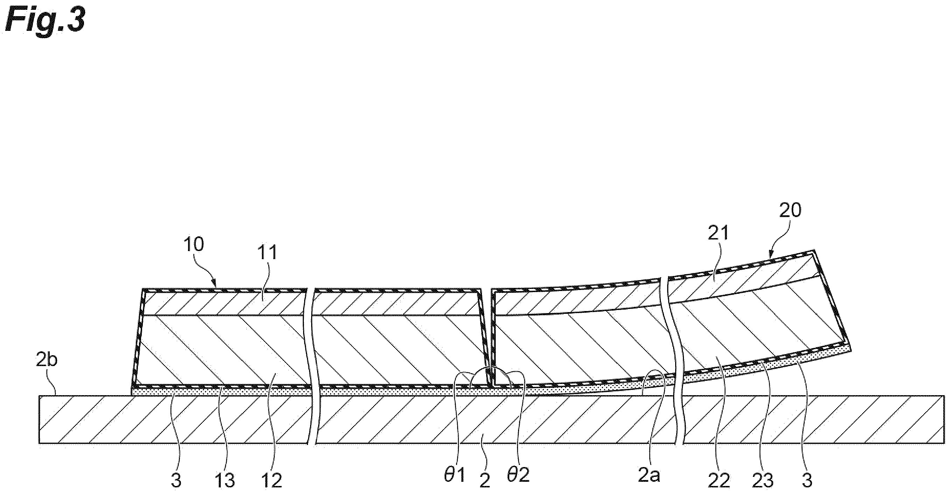

Subsequently, the release sheet 8 is released from the adhesive layer 3 of the scintillator panel unit 100, and as illustrated in FIG. 3, each of the first scintillator panel 10 and the second scintillator panel 20 is attached to the light receiving surface 2a by the adhesive layer 3 (an attaching step). That is, each of the first scintillator panel 10 and the second scintillator panel 20 is disposed on the light receiving surface 2a (a step of disposing each of the first scintillator panel 10 and the second scintillator panel 20). In the attaching step, the adhesive layer 3 is provided continuous over the first scintillator panel 10 and the second scintillator panel 20. In the attaching step, before each of the first scintillator panel 10 and the second scintillator panel 20 is attached to the light receiving surface 2a, the adhesive layer 3 is disposed on each of the first scintillator panel 10 and the second scintillator panel 20.

In the attaching step, since the first substrate 11 and the second substrate 21 each have flexibility, while the first scintillator panel 10 and the second scintillator panel 20 are deflected, each of the first scintillator panel 10 and the second scintillator panel 20 can be gradually attached to the light receiving surface 2a from one side. At this time, the corner portion of the second scintillator panel 20 formed by the surface 20a and the side surface 20b can be reliably brought into contact with the corner portion of the first scintillator panel 10 formed by the surface 10a and the side surface 10b.

Subsequently, as illustrated in FIG. 1, the first scintillator panel 10 and the second scintillator panel 20 are covered with the moisture-proof layer 5 on the sensor panel 2. That is, the moisture-proof layer 5 is disposed on the first scintillator panel 10 and the second scintillator panel 20 on a side opposite to the sensor panel 2 (a step of disposing the moisture-proof layer 5). In the step of disposing the moisture-proof layer 5, the moisture-proof layer 5 is provided continuous over the first scintillator panel 10 and the second scintillator panel 20. Subsequently, in the surface 2b of the sensor panel 2, the outer edge 5a of the moisture-proof layer 5 is sealed by the sealing member 7 to obtain the radiation detector 1. In the present embodiment, the step of disposing each of the first scintillator panel 10 and the second scintillator panel 20 is performed before the step of disposing the moisture-proof layer 5.

According to the method for manufacturing the radiation detector 1 described above, the aforementioned radiation detector 1 can be easily and reliably obtained.

In the method for manufacturing the radiation detector 1, in the attaching step, before each of the first scintillator panel 10 and the second scintillator panel 20 is attached to the light receiving surface 2a, the adhesive layer 3 is disposed on each of the first scintillator panel 10 and the second scintillator panel 20. Thereby, the first scintillator panel 10, the second scintillator panel 20, and the adhesive layer 3 can be handled in a state of being integrated with one another.

In the method for manufacturing the radiation detector 1, the step of disposing each of the first scintillator panel 10 and the second scintillator panel 20 is performed before the step of disposing the moisture-proof layer 5. Thereby, when the moisture-proof layer 5 is disposed on the first scintillator panel 10 and the second scintillator panel 20 on a side opposite to the sensor panel 2, the sensor panel 2, the first scintillator panel 10, and the second scintillator panel 20 can be handled in a state of being integrated with one another.

### [Modification Example]

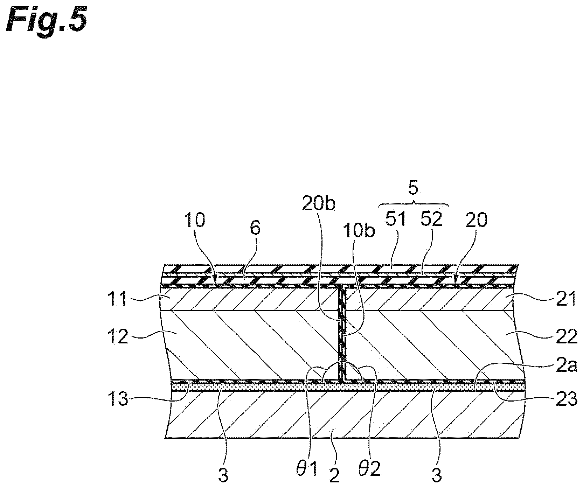

In the radiation detector 1, which is not according to the claimed invention, as illustrated in FIG. 5, each of the first angle θ1 and the second angle θ2 may be 90 degrees. That is, in the radiation detector 1, each of the first angle θ1 and the second angle θ2 may be 90 degrees or less. The same applies in the scintillator panel unit 100 and the method for manufacturing the radiation detector 1 described above.

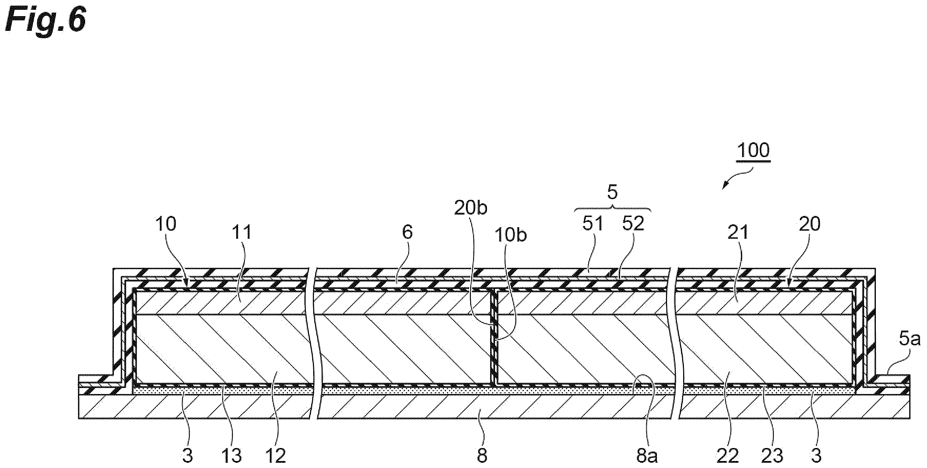

As illustrated in FIG. 6, the scintillator panel unit 100 may include the moisture-proof layer 5 as a support layer, and the first scintillator panel 10 and the second scintillator panel 20 disposed on the moisture-proof layer 5 in a state of being adjacent to each other along the moisture-proof layer 5. The configuration of the scintillator panel unit 100 illustrated in FIG. 6 is as follows. That is, the moisture-proof layer 5 is provided continuous over the first scintillator panel 10 and the second scintillator panel 20. The first scintillator panel 10 is disposed on the moisture-proof layer 5 in a state where the first substrate 11 is positioned on the moisture-proof layer 5 side with respect to the first scintillator layer 12. The second scintillator panel 20 is disposed on the moisture-proof layer 5 in a state where the second substrate 21 is positioned on the moisture-proof layer 5 side with respect to the second scintillator layer 22.

In the scintillator panel unit 100 illustrated in FIG. 6, the moisture-proof layer 5 covers the first scintillator panel 10 and the second scintillator panel 20, and the adhesive layer 6 is disposed between the first scintillator panel 10 and the moisture-proof layer 5 and between the second scintillator panel 20 and the moisture-proof layer 5. Further, the adhesive layer 3 is disposed between the first scintillator panel 10 and the release sheet 8 and between the second scintillator panel 20 and the release sheet 8, and the adhesive layer 6 is disposed between the outer edge 5a of the moisture-proof layer 5 and the release sheet 8. The adhesive layer 3 and the adhesive layer 6 each are a pressure-sensitive adhesive layer. The adhesive force of the adhesive layer 3 with respect to the surface 8a of the release sheet 8 is lower than the adhesive force of the adhesive layer 3 with respect to the first scintillator panel 10 and the second scintillator panel 20. The adhesive force of the adhesive layer 6 with respect to the surface 8a of the release sheet 8 is lower than the adhesive force of the adhesive layer 6 with respect to the outer edge 5a of the moisture-proof layer 5. According to the scintillator panel unit 100 illustrated in FIG. 6, the first scintillator panel 10, the second scintillator panel 20, and the moisture-proof layer 5 can be handled in a state of being integrated with one another. Note that, the scintillator panel unit 100 illustrated in FIG. 6 may not include the adhesive layer 3, a portion of the adhesive layer 6 disposed on the outer edge 5a, and the release sheet 8.

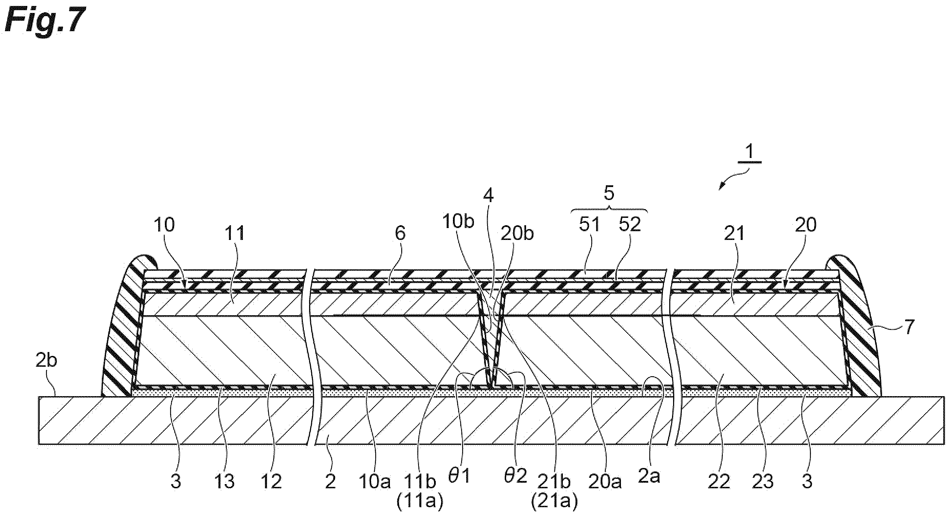

As illustrated in FIG. 7, in the radiation detector 1, the outer edge of the moisture-proof layer 5 may be positioned on the first scintillator panel 10 and the second scintillator panel 20, and the sealing member 7 may seal the side surfaces outside the first scintillator panel 10 and the second scintillator panel 20 and the side surface outside the moisture-proof layer 5 in the surface 2b of the sensor panel 2.

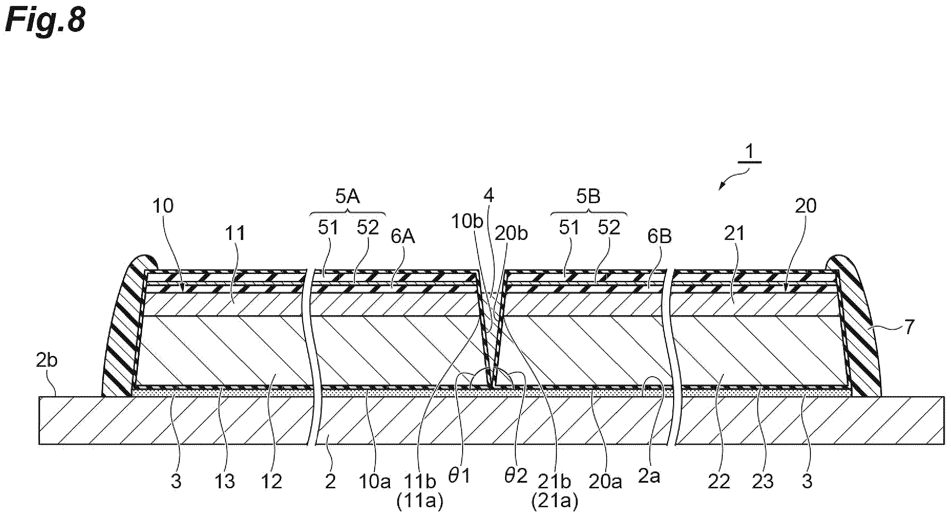

As illustrated in FIG. 8, in the radiation detector 1, a first moisture-proof layer 5A may be disposed on the first scintillator panel 10 on a side opposite to the sensor panel 2, and a second moisture-proof layer 5B may be disposed on the second scintillator panel 20 on a side opposite to the sensor panel 2. In this case, the first protective layer 13 may cover the first scintillator panel 10 and the first moisture-proof layer 5A, and the second protective layer 23 may cover the second scintillator panel 20 and the second moisture-proof layer 5B. The configurations of the first moisture-proof layer 5A and the second moisture-proof layer 5B are the same as the configuration of the moisture-proof layer 5 described above. In the radiation detector 1 illustrated in FIG. 8, the sealing member 7 seals the side surfaces outside the first scintillator panel 10 and the second scintillator panel 20 and the side surfaces outside of the first moisture-proof layer 5A and the second moisture-proof layer 5B, in the surface 2b of the sensor panel 2. According to the radiation detector 1 illustrated in FIG. 8, the plurality of columnar crystals having deliquescent properties can be protected.

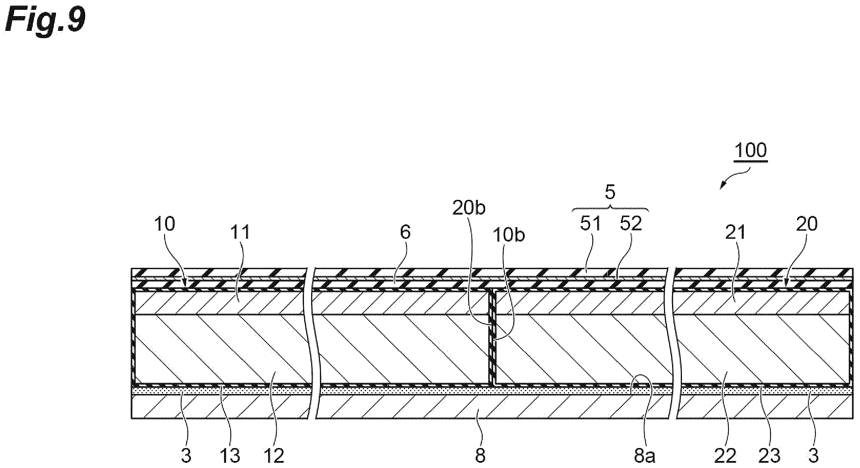

As illustrated in FIG. 9, in the scintillator panel unit 100, the outer edge of the moisture-proof layer 5 may be positioned on the first scintillator panel 10 and the second scintillator panel 20. Note that, the scintillator panel unit 100 illustrated in FIG. 9 may not include the adhesive layer 3 and the release sheet 8.

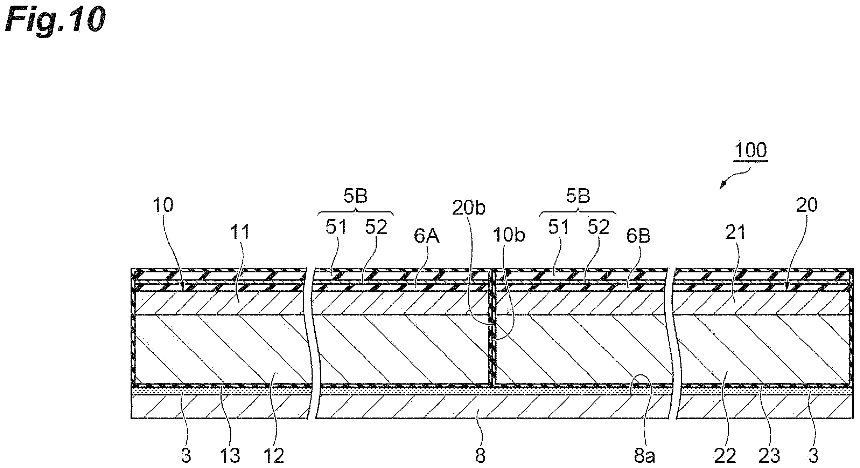

As illustrated in FIG. 10, in the scintillator panel unit 100, the first moisture-proof layer 5A may be disposed on the first scintillator panel 10 on a side opposite to the adhesive layer 3, and the second moisture-proof layer 5B may be disposed on the second scintillator panel 20 on a side opposite to the adhesive layer 3. In this case, the first protective layer 13 may cover the first scintillator panel 10 and the first moisture-proof layer 5A, and the second protective layer 23 may cover the second scintillator panel 20 and the second moisture-proof layer 5B. The configurations of the first moisture-proof layer 5A and the second moisture-proof layer 5B are the same as the configuration of the moisture-proof layer 5 described above. According to the scintillator panel unit 100 illustrated in FIG. 10, the plurality of columnar crystals having deliquescent properties can be protected.

In the radiation detector 1 and the scintillator panel unit 100, the first substrate 11 and the second substrate 21 each may not have flexibility. In this case, the material for each of the first substrate 11 and the second substrate 21 may be, for example, CFRP (carbon fiber reinforced plastic), a-C (amorphous carbon), Al, Cu, or glass. When the material for each of the first substrate 11 and the second substrate 21 is a metal, a functional film (such as a polyparaxylene film) may be formed, for example, as corrosion-resistant coating, on the front surface and the back surface of each of the first substrate 11 and the second substrate 21. This functional film may be a laminate film including a plurality of films each having a different function. As an example, when the material for each of the first substrate 11 and the second substrate 21 is Al, an alumite (anodized alumina) film and a polyparaxylene film may be formed on the front surface and the back surface of each of the first substrate 11 and the second substrate 21. In the radiation detector 1 and the scintillator panel unit 100, each of the first substrate 11 and the second substrate 21 may be a laminate substrate including a plurality of substrates (for example, a CFRP substrate and a PET substrate).

In the radiation detector 1 and the scintillator panel unit 100, the first scintillator layer 12 may reach at least the first portion 11b of the outer edge 11a of the first substrate 11. Similarly, the second scintillator layer 22 may reach at least the second portion 21b of the outer edge 11a of the second substrate 21. In the radiation detector 1 and the scintillator panel unit 100, the first substrate 11 and the first scintillator layer 12 are not limited to those obtained by cutting or clipping, and the first scintillator layer 12 may reach the side surface of the first substrate 11. Similarly, the second substrate 21 and the second scintillator layer 22 are not limited to those obtained by cutting or clipping, and the second scintillator layer 22 may reach the side surface of the second substrate 21.

In the radiation detector 1, the sensor panel 2 may not have flexibility. In this case, the material for the substrate provided with a plurality of photoelectric conversion elements in the sensor panel 2 is, for example, a-Si (amorphous silicon), Si (silicon), or glass (for example, alkali-free glass). In the radiation detector 1, the outer edge 5a of the moisture-proof layer 5 may reach the surface 2b of the sensor panel 2 around the light receiving surface 2a, and the sealing member 7 may seal the outer edge 5a of the moisture-proof layer 5 in the surface 2b of the sensor panel 2 in a state where a region defined by the sensor panel 2 and the moisture-proof layer 5 is decompressed. In this case, the moisture-proof layer 5 can be brought into close contact with the first scintillator panel 10 and the second scintillator panel 20 without using the adhesive layer 3. In the radiation detector 1, the moisture-proof layer 5 formed in a hat shape may cover the first scintillator panel 10 and the second scintillator panel 20 in the sensor panel 2, and the sealing member 7 may seal the outer edge 5a of the moisture-proof layer 5 in the surface 2b of the sensor panel 2.

The radiation detector 1 and the scintillator panel unit 100 may not include the moisture-proof layers 5, 5A, and 5B. The radiation detector 1 and the scintillator panel unit 100 may not include the first protective layer 13 and the second protective layer 23.

In the method for manufacturing the radiation detector 1, in the attaching step, before each of the first scintillator panel 10 and the second scintillator panel 20 is attached to the light receiving surface 2a, the adhesive layer 3 may be disposed on the light receiving surface 2a. In this case, the first scintillator panel 10 and the second scintillator panel 20 can be each independently handled. In the method for manufacturing the radiation detector 1, the step of disposing the moisture-proof layer 5 may be performed before the step of disposing each of the first scintillator panel 10 and the second scintillator panel 20. In this case, when each of the first scintillator panel 10 and the second scintillator panel 20 is disposed on the light receiving surface 2a, the first scintillator panel 10, the second scintillator panel 20, and the moisture-proof layer 5 can be handled in a state of being integrated with one another.

All of embodiments, modification examples, and the like of the radiation detector 1, the scintillator panel unit 100, and the method for manufacturing the radiation detector 1 described above may include, as a plurality of scintillator panels disposed one-dimensionally or two-dimensionally, the first scintillator panel 10 and the second scintillator panel 20. For example, when three scintillator panels are disposed one-dimensionally, any "two adjacent scintillator panels" can be regarded as the first scintillator panel 10 and the second scintillator panel 20. Furthermore, when four scintillator panels are disposed two-dimensionally, any "two adjacent scintillator panels" can be regarded as the first scintillator panel 10 and the second scintillator panel 20.

### Reference Signs List

1: radiation detector, 2: sensor panel, 2a: light receiving surface, 2b: surface, 3: adhesive layer, 4: granular phosphor, 5: moisture-proof layer, 5a: outer edge, 5A: first moisture-proof layer, 5B: second moisture-proof layer, 7: sealing member, 10: first scintillator panel, 10a: surface, 10b: side surface, 11: first substrate, 11a: outer edge, 11b: first portion, 12: first scintillator layer, 13: first protective layer, 20: second scintillator panel, 20a: surface, 20b: side surface, 21: second substrate, 21a: outer edge, 21b: second portion, 22: second scintillator layer, 23: second protective layer, 51: main body layer, 52: inorganic layer, 100: scintillator panel unit, θ1: first angle, θ2: second angle.

## Claims

1. A radiation detector comprising:
a sensor panel (2) having a light receiving surface (2a); and
a first scintillator panel (10) and a second scintillator panel (20) disposed on the light receiving surface (2a) in a state of being adjacent to each other along the light receiving surface (2a), wherein
the first scintillator panel (10) has a first substrate (11) and a first scintillator layer (12) including a plurality of columnar crystals formed on the first substrate (11),
the second scintillator panel (20) has a second substrate (21) and a second scintillator layer (22) including a plurality of columnar crystals formed on the second substrate (21),
the first scintillator panel (10) is disposed on the light receiving surface (2a) in a state where the first scintillator layer (12) is positioned on the light receiving surface side with respect to the first substrate (11),
the second scintillator panel (20) is disposed on the light receiving surface (2a) in a state where the second scintillator layer (22) is positioned on the light receiving surface side with respect to the second substrate (21),
an outer edge (11a) of the first substrate (11) when viewed from the first scintillator layer side includes a first portion (11b) extending along the second scintillator panel (20), and the first scintillator layer (12) reaches at least the first portion (11b),
an outer edge (21a) of the second substrate (21) when viewed from the second scintillator layer side includes a second portion (21b) extending along the first scintillator panel (10), and the second scintillator layer (22) reaches at least the second portion (22b),
**characterized in that**
a first angle (θ1) formed by a surface (2b) on the sensor panel side in the first scintillator panel (10) and a side surface (10b) on the second scintillator panel side in the first scintillator panel (10) is 45 degrees or more and less than 90 degrees, and
a second angle (θ2) formed by a surface (2b) on the sensor panel side in the second scintillator panel (20) and a side surface (20b) on the first scintillator panel side in the second scintillator panel (20) is 45 degrees or more and 90 degrees or less.

2. The radiation detector according to claim 1, wherein the first substrate (11) and the second substrate (21) each have flexibility.

3. The radiation detector according to claim 2, wherein each of the first angle (θ1) and the second angle (θ2) is less than 90 degrees, and
the sensor panel (2) has flexibility.

4. The radiation detector according to any one of claims 1 to 3, further comprising an adhesive layer (3) disposed between the light receiving surface (2a) and the first scintillator panel (10) and between the light receiving surface (2a) and the second scintillator panel (20), wherein
each of the first scintillator panel (10) and the second scintillator panel (20) is attached to the light receiving surface (2a) by the adhesive layer (3).

5. The radiation detector according to claim 4, wherein the adhesive layer (3) contains a pressure-sensitive adhesive or an adhesive.

6. The radiation detector according to any one of claims 1 to 5, wherein the first scintillator panel (10) further has a first protective layer (13) covering the first substrate (11) and the first scintillator layer (12), and
the second scintillator panel (20) further has a second protective layer (23) covering the second substrate (21) and the second scintillator layer (22).

7. The radiation detector according to any one of claims 1 to 6, further comprising a granular phosphor (4) disposed between the first scintillator panel (10) and the second scintillator panel (20).

8. The radiation detector according to any one of claims 1 to 7, further comprising a moisture-proof layer (5) disposed on the first scintillator panel (10) and the second scintillator panel (20) on a side opposite to the sensor panel (2), wherein
the moisture-proof layer (5) is provided continuous over the first scintillator panel (10) and the second scintillator panel (20).

9. The radiation detector according to claim 8, wherein the moisture-proof layer (5) has
a main body layer (51) having flexibility, and
an inorganic layer (52) disposed on the main body layer (51), and
the moisture-proof layer (5) is disposed on the first scintillator panel (10) and the second scintillator panel (20) in a state where the inorganic layer (52) is positioned on the side of the first scintillator panel (10) and the second scintillator panel (20) with respect to the main body layer (51).

10. The radiation detector according to claim 8 or 9, further comprising a sealing member (7), wherein
an outer edge (5a) of the moisture-proof layer (5) reaches a surface of the sensor panel (2) around the light receiving surface (2a), and
the sealing member (7) seals the outer edge (5a) of the moisture-proof layer (5) in the surface of the sensor panel (2) in a state where a region defined by the sensor panel (2) and the moisture-proof layer (5) is decompressed.

11. The radiation detector according to any one of claims 1 to 5, further comprising:
a first moisture-proof layer (5A) disposed on the first scintillator panel (10) on a side opposite to the sensor panel (2);
a second moisture-proof layer (5B) disposed on the second scintillator panel (20) on a side opposite to the sensor panel (2);
a first protective layer (13) covering the first scintillator panel (10) and the first moisture-proof layer (5A); and
a second protective layer (23) covering the second scintillator panel (20) and the second moisture-proof layer (5B).

12. A method for manufacturing the radiation detector according to any one of claims 1 to 11, the method comprising:
a step of preparing the sensor panel (2);
a step of preparing the first scintillator panel (10) and the second scintillator panel (20); and
a step of disposing each of the first scintillator panel (10) and the second scintillator panel (20) on the light receiving surface (2a), wherein
in the step of preparing the first scintillator panel (10) and the second scintillator panel (20),
**characterized in that**
a first angle (θ1) formed by a surface (2b) on the sensor panel side in the first scintillator panel (10) and a side surface (10b) on the second scintillator panel side in the first scintillator panel (10) is 45 degrees or more and less than 90 degrees, and
a second angle (θ2) formed by a surface (2b) on the sensor panel side in the second scintillator panel (20) and a side surface (20b) on the first scintillator panel side in the second scintillator panel (20) is 45 degrees or more and less than 90 degrees.

## Patentansprüche

1. Strahlungsdetektor, umfassend:
ein Sensorfeld (2) mit einer Lichtempfangsfläche (2a); und
ein erstes Szintillatorfeld (10) und ein zweites Szintillatorfeld (20), angeordnet auf der Lichtempfangsfläche (2a) in einem solchen Zustand, dass sie entlang der Lichtempfangsfläche (2a) aneinandergrenzen, wobei
das erste Szintillatorfeld (10) ein erstes Substrat (11) und eine erste Szintillatorschicht (12), umfassend eine Vielzahl von säulenförmigen Kristallen, gebildet auf dem ersten Substrat (11), aufweist,
das zweite Szintillatorfeld (20) ein zweites Substrat (21) und eine zweite Szintillatorschicht (22), umfassend eine Vielzahl von säulenförmigen Kristallen, gebildet auf dem zweiten Substrat (21), aufweist,
das erste Szintillatorfeld (10) auf der Lichtempfangsfläche (2a) in einem solchen Zustand angeordnet ist, dass die erste Szintillatorschicht (12) auf der Lichtempfangsfläche in Bezug auf das erste Substrat (11) angeordnet ist,
das zweite Szintillatorfeld (20) auf der Lichtempfangsfläche (2a) in einem solchen Zustand angeordnet ist, dass die zweite Szintillatorschicht (22) auf der Lichtempfangsfläche in Bezug auf das zweite Substrat (21) angeordnet ist,
eine Außenkante (11a) des ersten Substrats (11), von der Seite der ersten Szintillatorschicht aus gesehen, einen ersten Abschnitt (11b) umfasst, der sich entlang des zweiten Szintillatorfeldes (20) erstreckt, und die erste Szintillatorschicht (12) wenigstens den ersten Abschnitt (11b) erreicht,
eine Außenkante (21a) des zweiten Substrats (21), von der Seite der zweiten Szintillatorschicht aus gesehen, einen zweiten Abschnitt (21b) umfasst, der sich entlang des ersten Szintillatorfeldes (10) erstreckt, und die zweite Szintillatorschicht (22) wenigstens den zweiten Abschnitt (22b) erreicht,
**dadurch gekennzeichnet, dass**
ein erster Winkel (91), der von einer Fläche (2b) auf der Seite des Sensorfeldes im ersten Szintillatorfeld (10) und einer Seitenfläche (10b) auf der Seite des zweiten Szintillatorfeldes im ersten Szintillatorfeld (10) gebildet wird, 45 Grad oder mehr und weniger als 90 Grad beträgt, und
ein zweiter Winkel (92), der von einer Fläche (2b) auf der Seite des Sensorfeldes im zweiten Szintillatorfeld (20) und einer Seitenfläche (20b) auf der Seite des ersten Szintillatorfeldes im zweiten Szintillatorfeld (20) gebildet wird, 45 Grad oder mehr und 90 Grad oder weniger beträgt.

2. Strahlungsdetektor nach Anspruch 1, wobei das erste Substrat (11) und das zweite Substrat (21) jeweils Flexibilität aufweisen.

3. Strahlungsdetektor nach Anspruch 2, wobei sowohl der erste Winkel (91) als auch der zweite Winkel (92) kleiner als 90 Grad sind, und
das Sensorfeld (2) Flexibilität aufweist.

4. Strahlungsdetektor nach einem der Ansprüche 1 bis 3, ferner umfassend eine Klebeschicht (3), die zwischen der Lichtempfangsfläche (2a) und dem ersten Szintillatorfeld (10) und zwischen der Lichtempfangsfläche (2a) und dem zweiten Szintillatorfeld (20) angeordnet ist, wobei
sowohl das erste Szintillatorfeld (10) als auch das zweite Szintillatorfeld (20) durch die Klebeschicht (3) an der Lichtempfangsfläche (2a) befestigt sind.

5. Strahlungsdetektor nach Anspruch 4, wobei die Klebeschicht (3) einen Haftklebstoff oder einen Klebstoff enthält.

6. Strahlungsdetektor nach einem der Ansprüche 1 bis 5, wobei das erste Szintillatorfeld (10) ferner eine erste Schutzschicht (13) aufweist, die das erste Substrat (11) und die erste Szintillatorschicht (12) abdeckt, und
das zweite Szintillatorfeld (20) ferner eine zweite Schutzschicht (23) aufweist, die das zweite Substrat (21) und die zweite Szintillatorschicht (22) abdeckt.

7. Strahlungsdetektor nach einem der Ansprüche 1 bis 6, ferner umfassend einen körnigen Leuchtstoff (4), der zwischen dem ersten Szintillatorfeld (10) und dem zweiten Szintillatorfeld (20) angeordnet ist.

8. Strahlungsdetektor nach einem der Ansprüche 1 bis 7, ferner umfassend eine feuchtigkeitsbeständige Schicht (5), die auf dem ersten Szintillatorfeld (10) und dem zweiten Szintillatorfeld (20) auf einer dem Sensorfeld (2) gegenüberliegenden Seite angeordnet ist, wobei die feuchtigkeitsbeständige Schicht (5) durchgehend über dem ersten Szintillatorfeld (10) und dem zweiten Szintillatorfeld (20) angeordnet ist.

9. Strahlungsdetektor nach Anspruch 8, wobei die feuchtigkeitsbeständige Schicht (5)
eine Hauptkörperschicht (51) mit Flexibilität und
eine auf der Hauptkörperschicht (51) angeordnete anorganische Schicht (52) aufweist, und die feuchtigkeitsbeständige Schicht (5) auf dem ersten Szintillatorfeld (10) und dem zweiten Szintillatorfeld (20) in einem solchen Zustand angeordnet ist, dass die anorganische Schicht (52) auf der Seite des ersten Szintillatorfeldes (10) und des zweiten Szintillatorfeldes (20) in Bezug auf die Hauptkörperschicht (51) angeordnet ist.

10. Strahlungsdetektor nach Anspruch 8 oder 9, ferner umfassend ein Dichtelement (7), wobei
eine Außenkante (5a) der feuchtigkeitsbeständigen Schicht (5) eine Fläche des Sensorfeldes (2) um die Lichtempfangsfläche (2a) herum erreicht, und
das Dichtelement (7) die Außenkante (5a) der feuchtigkeitsbeständigen Schicht (5) in der Fläche des Sensorfeldes (2) in einem solchen Zustand abdichtet, dass ein durch das Sensorfeld (2) und die feuchtigkeitsbeständige Schicht (5) definierter Bereich druckenlastet ist.

11. Strahlungsdetektor nach einem der Ansprüche 1 bis 5, ferner umfassend:
eine erste feuchtigkeitsbeständige Schicht (5A), die auf dem ersten Szintillatorfeld (10) auf einer dem Sensorfeld (2) gegenüberliegenden Seite angeordnet ist;
eine zweite feuchtigkeitsbeständige Schicht (5B), die auf dem zweiten Szintillatorfeld (20) auf einer dem Sensorfeld (2) gegenüberliegenden Seite angeordnet ist;
eine erste Schutzschicht (13), die das erste Szintillatorfeld (10) und die erste feuchtigkeitsbeständige Schicht (5A) abdeckt; und
eine zweite Schutzschicht (23), die das zweite Szintillatorfeld (20) und die zweite feuchtigkeitsbeständige Schicht (5B) abdeckt.

12. Verfahren zum Herstellen des Strahlungsdetektors nach einem der Ansprüche 1 bis 11, wobei das Verfahren umfasst:
einen Schritt zum Vorbereiten des Sensorfeldes (2);
einen Schritt zum Vorbereiten des ersten Szintillatorfeldes (10) und des zweiten Szintillatorfeldes (20); und
einen Schritt zum Anordnen jeweils des ersten Szintillatorfeldes (10) und des zweiten Szintillatorfeldes (20) auf der Lichtempfangsfläche (2a), wobei
im Schritt zum Vorbereiten des ersten Szintillatorfeldes (10) und des zweiten Szintillatorfeldes (20),
**dadurch gekennzeichnet, dass**
ein erster Winkel (91), der von einer Fläche (2b) auf der Seite des Sensorfeldes im ersten Szintillatorfeld (10) und einer Seitenfläche (10b) auf der Seite des zweiten Szintillatorfeldes im ersten Szintillatorfeld (10) gebildet wird, 45 Grad oder mehr und weniger als 90 Grad beträgt, und
ein zweiter Winkel (92), der von einer Fläche (2b) auf der Seite des Sensorfeldes im zweiten Szintillatorfeld (20) und einer Seitenfläche (20b) auf der Seite des ersten Szintillatorfeldes im zweiten Szintillatorfeld (20) gebildet wird, 45 Grad oder mehr und weniger als 90 Grad beträgt.

## Revendications

1. Détecteur de rayonnement comprenant :
un panneau capteur (2) ayant une surface de réception de lumière (2a) ; et
un premier panneau scintillateur (10) et un second panneau scintillateur (20) disposés sur la surface de réception de lumière (2a) dans un état où ils sont adjacents l'un à l'autre le long de la surface de réception de lumière (2a), dans lequel le premier panneau scintillateur (10) a un premier substrat (11) et une première couche scintillatrice (12) comportant une pluralité de cristaux colonnaires formés sur le premier substrat (11),
le second panneau scintillateur (20) a un second substrat (21) et une seconde couche scintillatrice (22) comportant une pluralité de cristaux colonnaires formés sur le second substrat (21),
le premier panneau scintillateur (10) est disposé sur la surface de réception de lumière (2a) dans un état où la première couche scintillatrice (12) est positionnée sur le côté surface de réception de lumière par rapport au premier substrat (11),
le second panneau scintillateur (20) est disposé sur la surface de réception de lumière (2a) dans un état où la seconde couche scintillatrice (22) est positionnée sur le côté surface de réception de lumière par rapport au second substrat (21),
un bord extérieur (11a) du premier substrat (11), lorsqu'observé du côté première couche scintillatrice, comporte une première portion (11b) s'étendant le long du second panneau scintillateur (20), et la première couche scintillatrice (12) atteint au moins la première portion (11b),
un bord extérieur (21a) du second substrat (21), lorsqu'observé du côté seconde couche scintillatrice, comporte une seconde portion (21b) s'étendant le long du premier panneau scintillateur (10), et la seconde couche scintillatrice (22) atteint au moins la seconde portion (21b),
**caractérisé en ce que**
un premier angle (θ1) formé par une surface (2b) sur le côté panneau capteur dans le premier panneau scintillateur (10) et une surface latérale (10b) sur le côté second panneau scintillateur dans le premier panneau scintillateur (10) est de 45 degrés ou plus et inférieur à 90 degrés, et
un second angle (θ2) formé par une surface (2b) sur le côté panneau capteur dans le second panneau scintillateur (20) et une surface latérale (20b) sur le côté premier panneau scintillateur dans le second panneau scintillateur (20) est de 45 degrés ou plus et de 90 degrés ou moins.

2. Détecteur de rayonnement selon la revendication 1, dans lequel le premier substrat (11) et le second substrat (21) présentent chacun une flexibilité.

3. Détecteur de rayonnement selon la revendication 2, dans lequel chacun du premier angle (θ1) et du second angle (θ2) est inférieur à 90 degrés, et
le panneau capteur (2) présente une flexibilité.

4. Détecteur de rayonnement selon l'une quelconque des revendications 1 à 3, comprenant en outre une couche adhésive (3) disposée entre la surface de réception de lumière (2a) et le premier panneau scintillateur (10) et entre la surface de réception de lumière (2a) et le second panneau scintillateur (20), dans lequel chacun du premier panneau scintillateur (10) et du second panneau scintillateur (20) est fixé à la surface de réception de lumière (2a) par la couche adhésive (3).

5. Détecteur de rayonnement selon la revendication 4, dans lequel la couche adhésive (3) contient un adhésif sensible à la pression ou un adhésif.

6. Détecteur de rayonnement selon l'une quelconque des revendications 1 à 5, dans lequel le premier panneau scintillateur (10) comporte en outre une première couche de protection (13) recouvrant le premier substrat (11) et la première couche scintillatrice (12), et
le second panneau scintillateur (20) comporte en outre une seconde couche de protection (23) recouvrant le second substrat (21) et la seconde couche scintillatrice (22).

7. Détecteur de rayonnement selon l'une quelconque des revendications 1 à 6, comprenant en outre un luminophore granulaire (4) disposé entre le premier panneau scintillateur (10) et le second panneau scintillateur (20).

8. Détecteur de rayonnement selon l'une quelconque des revendications 1 à 7, comprenant en outre une couche anti-humidité (5) disposée sur le premier panneau scintillateur (10) et le second panneau scintillateur (20) sur un côté opposé au panneau capteur (2), dans lequel
la couche anti-humidité (5) est disposée de manière continue sur le premier panneau scintillateur (10) et le second panneau scintillateur (20).

9. Détecteur de rayonnement selon la revendication 8, dans lequel la couche anti-humidité (5) comporte
une couche de corps principale (51) présentant une flexibilité, et
une couche inorganique (52) disposée sur la couche de corps principale (51), et
la couche anti-humidité (5) est disposée sur le premier panneau scintillateur (10) et le second panneau scintillateur (20) dans un état où la couche inorganique (52) est positionnée sur le côté du premier panneau scintillateur (10) et du second panneau scintillateur (20) par rapport à la couche de corps principale (51).

10. Détecteur de rayonnement selon la revendication 8 ou 9, comprenant en outre un élément d'étanchéité (7), dans lequel
un bord extérieur (5a) de la couche anti-humidité (5) atteint une surface du panneau capteur (2) autour de la surface de réception de lumière (2a), et
l'élément d'étanchéité (7) assure l'étanchéité du bord extérieur (5a) de la couche anti-humidité (5) dans la surface du panneau capteur (2), dans un état où une région délimitée par le panneau capteur (2) et la couche anti-humidité (5) est décompressée.

11. Détecteur de rayonnement selon l'une quelconque des revendications 1 à 5, comprenant en outre :
une première couche anti-humidité (5A) disposée sur le premier panneau scintillateur (10) sur un côté opposé au panneau capteur (2) ;
une seconde couche anti-humidité (5B) disposée sur le second panneau scintillateur (20) sur un côté opposé au panneau capteur (2) ;
une première couche de protection (13) recouvrant le premier panneau scintillateur (10) et la première couche anti-humidité (5A) ; et
une seconde couche de protection (23) recouvrant le second panneau scintillateur (20) et la seconde couche anti-humidité (5B).

12. Procédé de fabrication du détecteur de rayonnement selon l'une quelconque des revendications 1 à 11, le procédé comprenant :
une étape de préparation du panneau capteur (2) ;
une étape de préparation du premier panneau scintillateur (10) et du second panneau scintillateur (20) ; et
une étape de disposition de chacun du premier panneau scintillateur (10) et du second panneau scintillateur (20) sur la surface de réception de lumière (2a), dans lequel lors l'étape de préparation du premier panneau scintillateur (10) et du second panneau scintillateur (20),
**caractérisé en ce que**
un premier angle (θ1) formé par une surface (2b) sur le côté panneau capteur dans le premier panneau scintillateur (10) et une surface latérale (10b) sur le côté second panneau scintillateur dans le premier panneau scintillateur (10) est de 45 degrés ou
plus et inférieur à 90 degrés, et
un second angle (θ2) formé par une surface (2b) sur le côté panneau capteur dans le second panneau scintillateur (20) et une surface latérale (20b) sur le côté premier panneau scintillateur dans le second panneau scintillateur (20) est de 45 degrés ou plus et inférieur à 90 degrés.
